# EUROPÄISCHE PATENTANMELDUNG

(11) **EP 1 420 492 A2**
(43) Veröffentlichungstag der Anmeldung: **19.05.2004**
(21) Anmeldenummer: 03090351.2
(22) Anmeldetag: 16.10.2003
(51) Int. Cl.: H02B 13/045, H02B 13/035

(54) **Gehäuse einer druckgasisolierten Baugruppe für eine elektrische Anlage**

(30) Priorität: 18.11.2002 DE 10254385
(71) Anmelder: SIEMENS AKTIENGESELLSCHAFT, 80333 München (DE)
(72) Erfinder: Seubert, Ingo, 10585 Berlin (DE); Tautz, Andre, 16565 Lehnitz (DE)

(57) **Zusammenfassung**

Ein rohrförmiges Gehäuse (20) einer druckgasisolierten Baugruppe für eine elektrische Anlage weist eine im Wesentlichen rohrförmige Gestalt auf. An den Enden des rohrförmigen Gehäuses (20) sind Flansche (21a, 21b) zum Befestigen des Gehäuses (20) vorgesehen. Zwischen den Flanschen (21a, 21b) sind am Umfang des Gehäuses (20) umlaufende Stege (23, 24) angeordnet. Die umlaufenden Stege (23, 24) bilden einen Aufnahmeraum, in welchem Hilfs- und Steuerleitung bzw. Anschlusselemente platzierbar sind.

## Beschreibung

Die Erfindung bezieht sich auf ein rohrförmiges Gehäuse einer druckgasisolierten Baugruppe für eine elektrische Anlage, an dessen Oberfläche ein oder mehrere Stege angeordnet sind, die einen Teil eines Aufnahmeraumes bilden, mit zumindest einem Flansch.

Ein derartiges Gehäuse ist beispielsweise aus dem deutschen Gebrauchsmuster DE 296 20 437 U1 bekannt. Bei dem bekannten Gehäuse ist ein Kabelkanal, welcher sich entlang der Längsausdehnung des Gehäuses erstreckt aus an dem Gehäuse angegossenen Stegen gebildet. Die dortige Stege sollen im Wesentlichen in vertikaler bzw. horizontaler Richtung verlaufen. Dadurch wird erreicht, dass der durch die Stege gebildete Kabelkanal nicht störend auf benachbarte Komponenten einer Schaltanlage wirkt.

Durch eine im Wesentlichen horizontale bzw. vertikale Ausrichtung der Stege können in dem durch sie gebildeten Kabelkanal Leitungen über große Strecken verlegt werden. Um Leitungen aus dem Kabelkanal ausführen zu können, sind bei dem bekannten Gehäuse in den Stegen Öffnungen vorgesehen, durch welche die Leitungen hindurchgeführt sind. Außerhalb des Kabelkanals sind diese Leitungen dann wieder gesondert zu befestigen. Insbesondere bei kleinen und kompakten Baugruppen ist durch eine zentrale Anordnung eines vertikal oder horizontal verlaufenden Kabelkanals eine Verlegung der Leitungen unter Nutzung des Kabelkanals mit relativ langen Kabelwegen verbunden. Alternativ ist es möglich, unter Nutzung eines relativ kurzen Kabelweges die Leitungen auf direktem Wege unter Auslassung des Kabelkanals zu verlegen. In diesem Falle ist dann jedoch eine entsprechende Halterung oder ein mechanischer Schutz der Leitungen notwendig.

Der Erfindung liegt die Aufgabe zugrunde, ein Gehäuse der eingangs genannten Art derart auszubilden, dass der zu einem Teil durch die Stege gebildete Aufnahmeraum eine flexiblere Verlegung von Leitungen bzw. Kabeln ermöglicht.

Die Aufgabe wird bei einem Gehäuse der eingangs genannten Art erfindungsgemäß dadurch gelöst, dass der/die Stege verschieden von dem Flansch ist/sind und entlang eines Umfanges des Gehäuses umlaufend angeordnet ist/sind.

Ein Umlaufen des Steges ermöglicht eine Nutzung des Aufnahmeraumes unter Verwendung von sehr kurzen Leitungswegen. Damit vereinfacht sich nunmehr eine Verdrahtung an der druckgasisolierten Baugruppe. Je nach Bedarf können die Leitungen innerhalb des Aufnahmeraumes im Uhrzeigersinn und entgegen des Uhrzeigersinnes um den Umfang des Gehäuses herum laufend angeordnet sein. Weiterhin sind an den Stegen an beliebigen Stellen Öffnungen vorsehbar, durch welche die Leitungen aus dem Inneren des Aufnahmeraumes nach außen hindurchgeführt werden. Diese Öffnungen können sehr flexibel am Umfang des Gehäuses verteilt angeordnet werden. Die aus dem Aufnahmeraum herauszuführenden Kabel bzw. Leitungen sind durch diese Öffnungen auf einem kurzen Weg nach außen führbar. Unnötige Leitungsumwege, die ein zusätzliches Füllen des Aufnahmeraumes bewirken, sind so vermieden.

Ein Aufnahmeraum ist günstig auszugestalten, indem zwei Stege genutzt werden, welche die Seitenwände des Aufnahmeraumes ausbilden. Es kann jedoch auch vorgesehen sein, dass lediglich ein Steg derart gestaltet ist, dass dieser die Seitenwände des Aufnahmeraumes ausbildet. Dabei kann weiterhin vorgesehen sein, dass ein Steg zusammen mit beispielsweise einem Flansch oder einer entsprechenden Ausformung des Gehäuses einen Aufnahmeraum ausbildet. Dazu kann der Steg beispielsweise eine Schulter aufweisen, durch welche der Aufnahmeraum gebildet ist.

Vorteilhafterweise kann weiterhin vorgesehen sein, dass der/die Stege an dem Umfang vollständig umlaufen.

Bei einem vollständigen Umlauf der Stege ergibt sich eine verbesserte Ausnutzung des Aufnahmeraumes. Oftmals entstehen bei der Nutzung von kürzestmöglichen Leitungs- bzw. Kabelwegen (Zweckverdrahtung) Punkte, an welchen eine erhöhte Dichte von Kabeln und Leitungen entsteht. An diesen Stellen ist oftmals die Aufnahmekapazität der Aufnahmeräume rasch erschöpft. Durch den vollständigen Umlauf der Stege können derartige Punkte erhöhter Konzentration leicht umgangen werden.

Eine weitere vorteilhafte Ausgestaltung kann vorsehen, dass der/die Stege als Ringscheibe ausgestaltet sind.

Bei einer Ausgestaltung der Stege als Ringscheibe ergeben sich dielektrisch günstige Verhältnisse hinsichtlich der Schirmung des Aufnahmeraumes. Ein Großteil des Aufnahmeraumes ist so durch gekrümmte Flächen ausbildbar. Neben vollständig umlaufenden Ringscheiben kann es auch vorgesehen sein, die Stege als Segmente einer Ringscheibe auszugestalten, beispielsweise in Form eines Viertelsegmentes oder eines Halbsegmentes.

Eine weitere vorteilhafte Ausgestaltung der Erfindung kann vorsehen, dass der/die Steg(e) eine Profilierung aufweisen.

Eine Profilierung der Stege gestattet es, die Flanken des Aufnahmeraumes derart zu gestalten, dass dieser beispielsweise ein ausgebauchtes Profil aufweist. Durch die Ausbauchung ist ein Aufnahmeraum mit einem großen Aufnahmevolumen ausbildbar, welcher eine gegenüber der Grundfläche verkleinerte Öffnung zwischen den freien Stegkanten aufweist. Zum Abdecken und Abschotten des Aufnahmeraumes sind lediglich kleine Abdeckelemente nötig. Darüber hinaus kann die Profilierung genutzt werden, um weitere Bauteile, wie beispielsweise Abdeckungen oder Kabelschellen, zu halten.

Weiterhin kann vorteilhaft vorgesehen sein, dass der/die Stege eine Hinterschneidung aufweisen.

In die Stege eingebrachte Hinterschneidungen sind in einer einfachen Art dazu geeignet, einen Aufnahmeraum beispielsweise für die Führung einer geringen Anzahl von Kabeln oder Leitungen bereitzustellen. Diese Hinterschneidungen können mit an dem Steg angeordneten Schultern kombiniert sein, so dass eine sehr flexible Anordnung eines Aufnahmeraumes an dem Gehäuse einer druckgasisolierten Baugruppe einer elektrischen Anlage vorgenommen werden kann. Neben der Bildung von Aufnahmeräumen durch Hinterschneidungen kann eine Hinterschneidung jedoch auch dazu vorgesehen sein, der Befestigung von weiteren Baugruppen zu dienen. So können in die Hinterschneidungen beispielsweise als Aufnahme für Schellen zur Führung von Kabeln und Leitungen eingesetzt werden. Weiterhin können die Hinterschneidungen auch dazu dienen, Abdeckelemente zu fixieren.

Vorteilhafterweise kann weiterhin vorgesehen sein, dass ein auf dem/ den Steg(en) ruhendes Abdeckelement den Aufnahmeraum schottet.

Durch ein oder mehrere Abdeckelemente kann der Aufnahmeraum, welcher durch die Stege gebildet ist, abgeschottet werden. Dadurch ist es möglich, die im Innern angeordneten Kabel und Leitungen vor äußeren Einflüssen zu schützen. Die Schottung kann dabei derart gestaltet werden, dass sie gas- oder feuchtigkeitsdicht schottet oder dass sie zusätzlich bzw. alternativ den Aufnahmeraum vor dem Eindringen von elektromagnetischer Strahlung abschottet. Eine gute Schottung elektromagnetischer Strahlung wird erzielt bei einer Verwendung elektrisch leitender Materialien für die Abdeckelemente und einer elektrisch leitenden Verbindung derselben mit den Stegen. Es kann auch vorgesehen sein, isolierende Kunststoffe, beispielsweise durch eine Beschichtung, elektrisch leitend zu gestalten. Die Befestigung des Abdeckelementes kann beispielsweise mit Schraubverbindungen, mit Nietverbindungen oder mit Schellen erfolgen. Es kann vorgesehen sein, dass die Abdeckelemente derart befestigt sind, dass die Abdeckelemente plombierbar sind, um einem unbefugten Öffnen des Aufnahmeraumes vorzubeugen.

Weiterhin kann vorteilhaft vorgesehen sein, dass das Abdeckelement sich auf dem/ den Steg(en) abstützend aufrastbar ist.

Das Aufrasten des Abdeckelementes gestattet eine sehr einfache und effektive Montage des Abdeckelementes. Zusätzliche Werkzeuge werden nicht benötigt. Zum Aufrasten können die Stege profiliert oder hinterschnitten sein.

Vorteilhafterweise kann weiterhin vorgesehen sein, dass innerhalb des Aufnahmeraumes Hilfs-/Steuerleitungen durch die Wandung des Gehäuses hindurchgeführt sind.

Durch die Stege ist der Bereich des Hindurchführens von Hilfs-/Steuerleitungen mechanisch geschützt. Die verwendeten Durchführungen weisen häufig Kunststoffkomponenten auf, welche durch die Stege günstig zu schützen sind. Weiterhin wird der Schutz der Hindurchführung der Hilfs-/Steuerleitungen durch die Verwendung eines oben genannten Abdeckelementes noch verstärkt. So ist es beispielsweise ermöglicht, innerhalb des Gehäuses liegende Teile der druckgasisolierten Baugruppe über Hilfs-/Steuerleitungen miteinander zu verbinden und die Hilfs-/Steuerleitungen hauptsächlich außerhalb der Druckgasisolierung zu verlegen. Dadurch kann der Bauraum des Gehäuses, der mit einem Druckgas beaufschlagt wird, verkleinert werden. Weiterhin ist der Zustand der Steuerleitungen der Hilfs-/Steuerleitungen außerhalb des druckgasisolierten Raumes des Gehäuses mit einer einfachen Sichtprüfung überwachbar.

Vorteilhafterweise kann weiterhin vorgesehen sein, dass innerhalb des Aufnahmeraums ein Anschlusselement für Hilfs-/Steuerleitungen angeordnet ist.

Durch das Vorsehen eines Anschlusselementes innerhalb des durch die Stege begrenzten Aufnahmeraumes ist in einfacher Weise eine Anpassung der Grundkonfiguration der druckgasisolierten Baugruppe ermöglicht. So kann beispielsweise die Verschaltung von Windungen einer im Inneren des Gehäuses angeordneten Baugruppe außerhalb der Druckgasisolation erfolgen. So können beispielsweise Stern- oder Dreiecksschaltungen der Windungen in einfacher Weise ineinander überführt werden.

Weiterhin können die Anschlusselemente auch dazu dienen, von außerhalb des Aufnahmeraumes in diesen eingeführte Hilfs- bzw. Steuerleitungen an weitere innerhalb des Aufnahmeraumes angeordnete Hilfs-/Steuerleitungen anzukoppeln. Hilfs-/Steuerleitungen dienen der Übertragung von Informationen oder Energien von oder zu der Schaltanlage. Dies ist notwendig, um eine Schaltanlage überwachen, steuern, schützen usw. zu können. Hilfs-/Steuerleitungen sind beispielsweise elektrische Leitungen, optische Leitungen, Rohrleitungen, welche flüssige oder gasförmige Medien führen.

Vorteilhafterweise kann weiterhin vorgesehen sein, dass die Baugruppe ein Spannungs-/Stromwandler ist.

Spannungs-/Stromwandler weisen bei einer induktiven Ausführung eine Vielzahl von Wicklungen auf, die im Innern des druckgasisolierten Gehäuses angeordnet sind. Die einzelnen Teile der Wandler sind in den meisten Fällen regelmäßig oder sogar symmetrisch innerhalb des Gehäuses verteilt angeordnet. Einzelne Wicklungen oder Elektroden sind je nach Verwendung des Wandlers miteinander verschieden zu verschalten. Die Verschaltung kann dabei in einer einfachen Weise innerhalb des Aufnahmeraumes erfolgen. Dazu können die oben stehend beschriebenen Anschlusselemente für Hilfs-/Steuerleitungen verwandt werden. Derartige Anschlusselemente sind beispielsweise Klemmleisten, Steckerleisten, Krimpleisten, Pressleisten oder Verteilbausteine. Weiterhin kann der Einbau von zusätzlichen Bauelementen, wie beispielsweise Prozessormodulen, vorgesehen sein.

Wandler weisen einen standardisierten Grundaufbau auf. Je nach Einsatzzweck ist dieser Grundaufbau zu modifizieren. Dies gilt insbesondere für induktive Wandler. Eine erfindungsgemäße Ausgestaltung eines Aufnahmeraumes, wie oben beschrieben, ist jedoch auch bei Spannungs- und Stromwandlern anwendbar, die nach einem von der induktiven Übertragung abweichenden Wirkprinzip arbeiten, wie beispielsweise kapazitive Wandler oder optische Wandler. Auch bei diesen Varianten lässt sich der Aufnahmeraum zur Verlegung von Hilfs-/Steuerleitung sowie zur Anordnung von Anschlusselementen nutzen.

Im Folgenden wird die Erfindung anhand von Ausführungsbeispielen in einer Zeichnung schematisch gezeigt und nachfolgend näher beschrieben.

Dabei zeigt die
- Figur 1: ein erstes Gehäuses mit Stegen, die
- Figur 2: ein zweites Gehäuses mit Stegen, die
- Figur 3: einen Schnitt durch einen Wandungsabschnitt eines Gehäuses mit Steg, die
- Figur 4: ein drittes Gehäuse mit Stegen sowie die
- Figur 5: das dritte Gehäuse mit Stegen in einer komplettierten Ansicht.

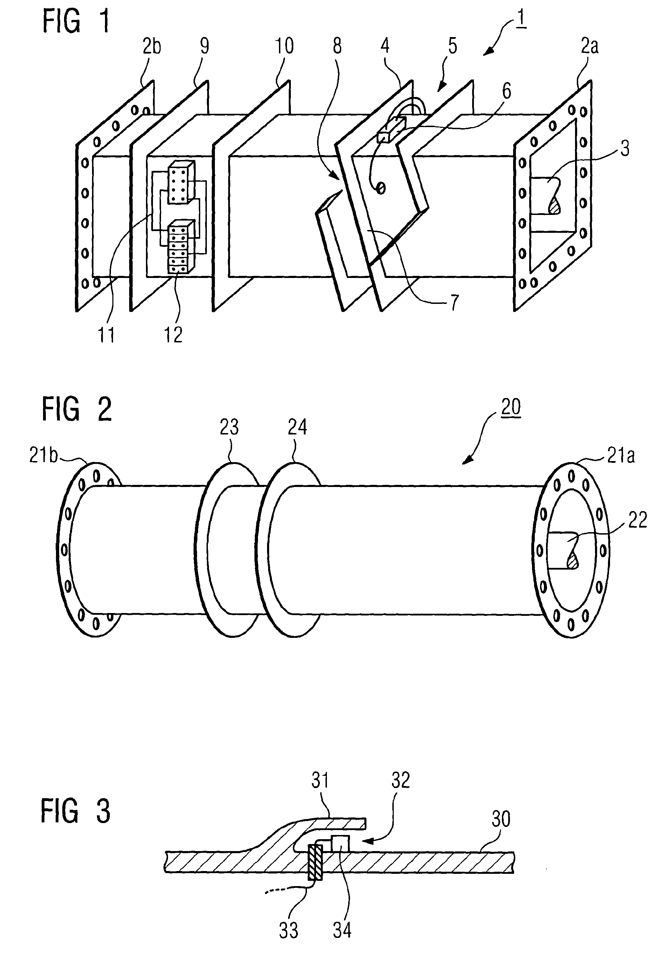

Die Figur 1 zeigt ein erstes Gehäuses 1, welches einen rechteckigen Querschnitt aufweist. Das erste Gehäuse 1 ist rohrförmig ausgebildet. An den Rohrenden des ersten Gehäuses 1 ist jeweils ein Flansch 2a, 2b angeordnet. Die Flansche 2a, 2b dienen dem Befestigen des ersten Gehäuses 1 an weiteren Gehäusebausteinen. Das erste Gehäuse 1 ist beispielsweise als Gehäuse für einen Abschnitt einer druckgasisolierten Schaltanlage oder eines druckgasisolierten Rohrleiters verwendbar. Im Innern des ersten Gehäuses 1 ist ein elektrischer Leiter 3 angeordnet. Der elektrische Leiter 3 ist gegenüber den Wandungen des ersten Gehäuses 1 isoliert gelagert. Der Raum im Innern des ersten Gehäuses 1 ist beispielsweise mit Isoliergas, insbesondere Schwefelhexafluorid oder Stickstoff, befüllt. Neben dem elektrischen Leiter 3 können im Innern des ersten Gehäuses 1 weitere Baugruppen innerhalb der Druckgasisolierung angeordnet sein. Derartige Baugruppen sind beispielsweise Sensoren zur Erfassung von Temperaturen, Drücken, Lichterscheinungen, Strömen oder Spannungen. Das erste Gehäuse 1 weist an seiner Außenseite einen ersten Steg 4 auf. Der erste Steg 4 windet sich spiralförmig unter Bildung eines Zwischenraumes um den Umfang des ersten Gehäuses 1 herum. Durch die spiralförmige Windung ist zwischen den Flanken einund desselben Steges ein Aufnahmeraum gebildet. In dem so begrenzten Aufnahmeraum sind erste Hilfs-/Steuerleitungen 5 angeordnet. Die ersten Hilfs-/Steuerleitungen 5 sind an ein erstes Anschlusselement 6 angeschlossen, Das erste Anschlusselement 6 ist beispielsweise als ein Steckkontakt ausgebildet. Die Enden des ersten Steges 4 sind jeweils zu einem mittleren Abschnitt 7 des ersten Steges 4 hin gerichtet. Dabei kann es vorgesehen sein, dass die Enden bis an den mittleren Abschnitt 7 heranreichen oder eine Öffnung 8 vorgesehen ist, durch welche beispielsweise weitere Hilfs-/Steuerleitungen einführbar sind.

Das erste Gehäuse 1 weist darüber hinaus einen zweiten Steg 9 sowie einen dritten Steg 10 auf. Der zweite Steg 9 sowie der dritte Steg 10 sind baugleich gestaltet und verlaufen zueinander parallel am Umfang des Gehäuses 1. Der zweite Steg 9 sowie der dritte Steg 10 sind in sich geschlossen ausgebildet. Zwischen dem zweiten Steg 9 und dem dritten Steg 10 ist ein Aufnahmeraum ausgebildet. Der Aufnahmeraum ist mit zweiten Hilfs-/Steuerelementen 11 sowie einem zweiten Anschlusselement 12 versehen. Das zweite Anschlusselement 12 ist im vorliegenden Fall beispielsweise eine Reihenklemmleiste. Der zwischen dem zweiten Steg 9 und dem dritten Steg 10 gebildete Aufnahmeraum läuft vollständig um den gesamten Umfang des ersten Gehäuses 1 um und ist in sich geschlossen.

Die Figur 2 zeigt ein zweites Gehäuse 20, welches rohrförmig ausgebildet ist und einen kreisförmigen Querschnitt aufweist. An den Enden des zweiten Gehäuses 20 sind jeweils Flansche 21a,21b angeordnet. Im Innern des zweiten Gehäuses 20 ist ein elektrischer Leiter 22 gegenüber der Gehäusewandung isoliert gelagert. Ebenso, wie bereits oben stehend zum ersten Gehäuse 1 ausgeführt, ist das zweite Gehäuse 20 als Teil einer druckgasisolierten Schaltanlage oder eines druckgasisolierten Rohrleiters verwendbar.

Zwischen den Flanschen 21a, 21b des zweiten Gehäuses 20 ist ein vierter Steg 23 sowie ein fünfter Steg 24 angeordnet. Der vierte Steg 23 sowie der fünfte Steg 24 sind als Ringscheibe ausgestaltet und bilden einen Aufnahmeraum aus, welcher ein hohlzylindrisches Aufnahmevolumen aufweist.

Die an dem ersten Gehäuse 1 sowie an dem zweiten Gehäuse 20 ausgebildeten Aufnahmeräume sind jeweils mittels Abdeckelementen abschottbar. Aus Gründen der Erkennbarkeit wurde auf eine Darstellung der Abdeckelemente verzichtet.

Die Figur 3 zeigt einen Schnitt durch einen Abschnitt einer Wandung eines Gehäuses einer druckgasisolierten Baugruppe für eine elektrische Schaltanlage. An der Wandung 30 ist ein sechster Steg 31 angegossen. Der sechste Steg 31 weist eine Profilierung durch eine Hinterschneidung 32 auf und ist an seiner Basis verdickt. Die Hinterschneidung 32 bildet einen Aufnahmeraum. In dem Aufnahmeraum ist eine dritte Steuerleitung 33 an ein drittes Anschlusselement 34 angeschlossen und mittels einer gasdichten Durchführung in das Innere des Gehäuses der druckgasisolierten Baugruppe hineingeführt. Die Öffnung der Hinterschneidung 32 kann mittels eines Abdeckelementes verschlossen werden, so dass der Aufnahmeraum vollständig geschottet ist.

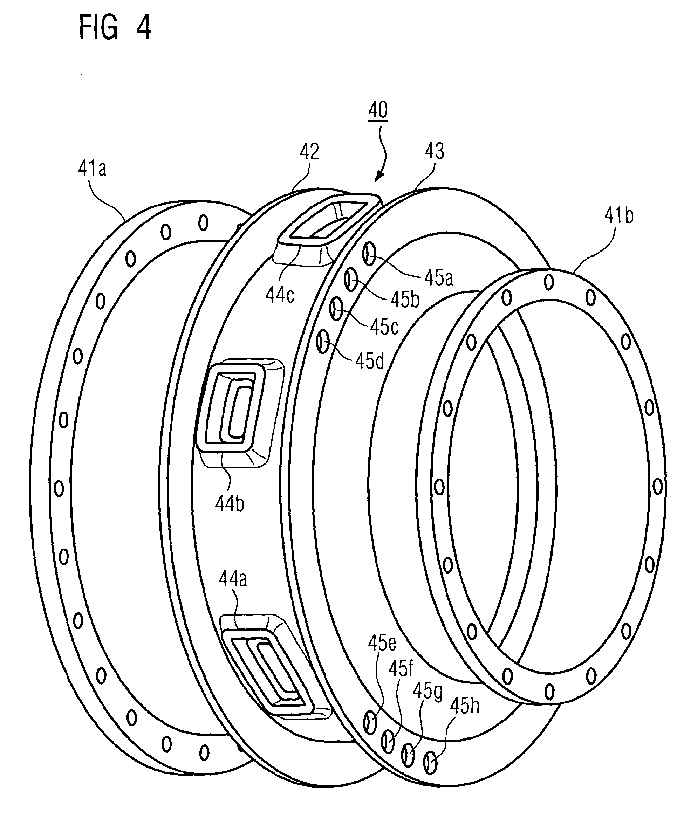

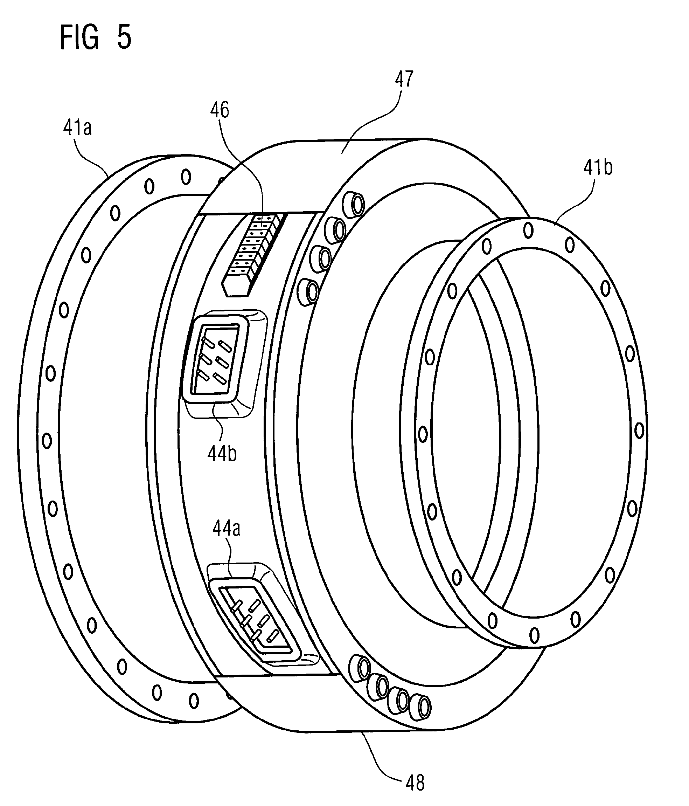

Die Figuren 4 und 5 zeigen eine perspektivische Ansicht eines vierten Gehäuses 40. Das vierte Gehäuse 40 ist rohrförmig ausgestaltet, wobei es verschieden gestaltete Querschnittsflächen aufweist, die jeweils kreisrund ausgestaltet sind, jedoch verschiedene Durchmesser aufweisen. An den Enden des vierten Gehäuses 40 sind Flansche 41a, 41b angeordnet. Das vierte Gehäuse 40 weist im Verhältnis zu seinem größten Durchmesser eine kurze Länge auf. Das vierte Gehäuse 40 ist daher besonders geeignet, in seinem Inneren einen Stromwandler aufzunehmen. Der Stromwandler besteht aus einer Vielzahl von Windungen, die um einen elektrischen Leiter herum angeordnet sind.

Zwischen den Flanschen 41 und 41b des vierten Gehäuses 40 ist ein siebenter Steg 42 sowie ein achter Steg 43 angeordnet. Der siebte Steg 42 sowie der achte Steg 43 sind an der Außenseite des vierten Gehäuses 40 angegossen. Der siebte Steg 42 sowie der achte Steg 43 weisen eine ringscheibenförmige Gestalt auf. Zwischen dem siebenten Steg 42 und dem achten Steg 43 ist ein Aufnahmeraum ausgebildet. Innerhalb des Aufnahmeraums sind symmetrisch am Umfang des vierten Gehäuses 40 mehrere Angusstücke 44a,b,c angeordnet. Diese Angusstücke 44a,b,c dienen der Hindurchführung von Messleitungen aus dem Inneren des vierten Gehäuses 40 in den Aufnahmeraum. In die Flanke des achten Steges 43 sind mehrere Öffnungen 45a,b,c,d,e,f,g,h eingebracht.

In der Figur 5 ist die aus der Figur 4 bekannte Darstellung mit einigen Anbauteilen ergänzt. So sind an den Angusstücken 44a, 44b die Leitungsenden der Wicklungen des im Innern des vierten Gehäuses 40 angeordneten Stromwandlers gasdicht durch die Gehäusewandung des vierten Gehäuses 40 hindurchgeführt. Weiterhin ist eine Reihenklemmleiste 46 zwischen den Angusstücken 44b, 44c innerhalb des Aufnahmeraums angeordnet. Die Enden der Wicklungen, die an den Angusstücken 44a, 44b ortsfest gelagert sind, sind nunmehr mittels Hilfs-/Steuerleitungen an die Reihenklemmleiste 46 anschließbar. Mittels der Reihenklemmleiste 46 und entsprechender Brückenschaltungen sind die einzelnen Windungen miteinander in einer erwünschten Schaltungsvariante, beispielsweise zur Erzielung eines bestimmten Übersetzungsverhältnisses des Wandlers, miteinander zu verschalten. Weiterhin ist durch die als Anschlusselement dienende Reihenklemmleiste 46 ein Anschluss der Windungen des Stromwandlers an ein Überwachungs- und Steuerungssystem ermöglicht. Die dafür von außen in das Innere des zwischen dem siebenten Steg 42 und dem achten Steg 43 gebildeten Aufnahmeraumes einzuführenden Leitungen sind durch die Öffnungen 45a,b,c,d,e,f,g,h abgedichtet einführbar.

Um den zwischen dem siebenten Steg 42 und dem achten Steg 43 gebildeten Aufnahmeraum abzuschotten, sind in der Figur 5 symbolisch Abdeckelemente 47, 48 dargestellt. Die Abdeckelemente 47, 48 sind beispielsweise unter Nutzung der Krümmung des siebenten Steges 42 sowie des achten Steges 43 auf dem Aufnahmeraum aufrastbar. Dabei können die Abdeckelemente 47, 48 derart gestaltet sein, dass sie den Aufnahmeraum sowohl dielektrisch abschirmen als auch gegen das Eindringen von Feuchtigkeit und Fremdkörpern mechanisch abschotten. Weiterhin kann es vorgesehen sein, dass die Abdeckelemente in ihrem Randbereich Führungsabschnitte aufweisen, welche ein seitliches Verschieben der Abdeckelemente 47, 48 auf dem siebenten Steg 42 und dem achten Steg 43 in Richtung der Flansche 41a, 41b verhindern. Diese Führungsabschnitte können weiterhin derart gestaltet sein, dass sie an an dem siebenten Steg 42 und dem achten Steg 43 angeordneten Hintergreifungen einrasten und so eine Rastverbindung bilden, die ein ungewolltes Abheben der Abdeckelemente 47, 48 verhindert. Weiterhin kann es vorgesehen sein, dass die Abdeckelemente 47, 48 mittels einer das vierte Gehäuse 40 umgreifenden Schelle vor einem Abheben geschützt sind. Die Befestigung der Abdeckelemente 47, 48 kann dabei derart erfolgen, dass zum Schutz vor einem unberechtigten Öffnen der Abdeckelemente 47, 48 dieselben plombierbar sind.

Die in den Figuren 1 bis 5 dargestellten Ausgestaltungsvarianten sind in ihren Detailausführungen untereinander kombinierbar, so dass weitere Varianten von Gehäusen einer druckgasisolierten Baugruppe für eine elektrische Anlage ausgestaltbar sind.

## Patentansprüche

1. Rohrförmiges Gehäuse (1, 20, 40) einer druckgasisolierten Baugruppe für eine elektrische Anlage, an dessen Oberfläche ein oder mehrere Stege (4, 9, 10, 23,42, 43) angeordnet sind, die einen Teil eines Aufnahmeraumes bilden, mit zumindest einem Flansch (2a, 2b, 21a, 21b, 41a, 41b),
**dadurch gekennzeichnet, dass** der/die Stege (4, 9, 10, 23, 24, 42, 43) verschieden von dem Flansch (2a, 2b, 21a, 21b, 41a, 41b) ist/sind und entlang eines Umfanges des Gehäuses (1, 20, 40) umlaufend angeordnet ist/sind.

2. Rohrförmiges Gehäuse (1, 20, 40) einer druckgasisolierten Baugruppe nach Anspruch 1,
**dadurch gekennzeichnet, dass** der/die Stege (4, 9, 10, 23, 24, 42, 43) an dem Umfang vollständig umlaufen.

3. Rohrförmiges Gehäuse (1, 20, 40) einer druckgasisolierten Baugruppe nach Anspruch 1 oder 2,
**dadurch gekennzeichnet, dass** der/die Stege (23, 24, 42, 43) als Ringscheibe ausgestaltet sind.

4. Rohrförmiges Gehäuse (1, 20, 40) einer druckgasisolierten Baugruppe nach einem der Ansprüche 1 bis 3,
**dadurch gekennzeichnet, dass** der/die Steg(e) (31) eine Profilierung aufweisen.

5. Rohrförmiges Gehäuse (1, 20, 40) einer druckgasisolierten Baugruppe nach Anspruch 4,
**dadurch gekennzeichnet, dass** der/die Stege (31) eine Hinterschneidung (32) aufweisen.

6. Rohrförmiges Gehäuse (1, 20, 40) einer druckgasisolierten Baugruppe nach einem der Ansprüche 1 bis 5,
**dadurch gekennzeichnet, dass** ein auf dem/ den Steg(en) (42, 43) ruhendes Abdeckelement (47, 48) den Aufnahmeraum schottet.

7. Rohrförmiges Gehäuse (1, 20, 40) einer druckgasisolierten Baugruppe nach Anspruch 6,
**dadurch gekennzeichnet, dass** das Abdeckelement (47, 48) sich auf dem/ den Steg(en) (42, 43) abstützend aufrastbar ist.

8. Rohrförmiges Gehäuse (1, 20, 40) einer druckgasisolierten Baugruppe nach einem der Ansprüche 1 bis 7,
**dadurch gekennzeichnet, dass** innerhalb des Aufnahmeraumes Hilfs-/Steuerleitungen (3) durch die Wandung (30) des Gehäuses (1, 20, 40) hindurchgeführt sind.

9. Rohrförmiges Gehäuse (1, 20, 40) einer druckgasisolierten Baugruppe nach einem der Ansprüche 1 bis 8,
**dadurch gekennzeichnet, dass** innerhalb des Aufnahmeraums ein Anschlusselement (6, 12, 34, 46) für Hilfs-/Steuerleitungen(5, 11, 33) angeordnet ist.

10. Rohrförmiges Gehäuse (1, 20, 40) einer druckgasisolierten Baugruppe nach einem der Ansprüche 1 bis 9,
**dadurch gekennzeichnet, dass** die Baugruppe ein Spannungs-/Stromwandler ist.
